# EUROPEAN PATENT APPLICATION

(11) **EP 3 477 149 A1**
(43) Date of publication of application: **01.05.2019**
(21) Application number: 17815480.3
(22) Date of filing: 22.06.2017
(51) Int. Cl.: F16F 13/10

(54) **VIBRATION DAMPING DEVICE**

(30) Priority: 22.06.2016 JP 2016123966
(71) Applicant: Bridgestone Corporation, Tokyo 104-8340 (JP)
(72) Inventor: UEKI, Akira, Tokyo 104-8340 (JP); SATAKE, Yuki, Tokyo 104-8340 (JP); NAGASAWA, Masakazu, Tokyo 104-8340 (JP); NAGASHIMA, Yasuyuki, Tokyo 104-8340 (JP); SUGAWARA, Hideki, Tokyo 104-8340 (JP); OONO, Shingo, Tokyo 104-8340 (JP)
(74) Representative: Oxley, Robin John George
(86) International application number: PCT/JP2017/023033
(87) International publication number: WO 2017/222014

(57) **Abstract**

A vibration-damping device (10) includes a tubular first attachment member (11) that is coupled to any one of a vibration-generating portion and a vibration-receiving portion; a second attachment member (12) that is coupled to the other one of the vibration-generating portion and the vibration-receiving portion; an elastic body (13) that couples both the attachment members (11 and 12) to each other; and a partition member (16) that divides a liquid chamber (19) inside the first attachment member (11) into a main liquid chamber (14) having the elastic body (13) as a part of a wall surface, and a sub-liquid chamber (15). A restriction passage (24) through which the main liquid chamber (14) and the sub-liquid chamber (15) communicate with each other is formed in the partition member (16). The partition member (16) is provided with a flow-speed restraint portion (32) which restrains a flow speed of liquid (L) flowing in the restriction passage (24). The flow-speed restraint portion (32) restrains a peak flow speed of the liquid (L) flowing into the main liquid chamber (14) from the restriction passage (24) to 10 m/sec or lower, when a liquid pressure in the main liquid chamber (14) is a negative pressure and a fluctuation rate of the liquid pressure within a predetermined time is 5% or lower.

## Description

### Technical Field

The present invention relates to a vibration-damping device which is applied to automobiles or industrial machinery, for example, and absorbs and attenuates vibration of a vibration-generating portion such as an engine.

Priority is claimed on Japanese Patent Application No. 2016-123966, filed on June 22, 2016, the content of which is incorporated herein by reference.

### Background Art

In the related art, as a vibration-damping device of such a kind, a known configuration includes a tubular first attachment member that is coupled to one of a vibration-generating portion and a vibration-receiving portion, a second attachment member that is coupled to the other one of the vibration-generating portion and the vibration-receiving portion, an elastic body that couples both the attachment members to each other, and a partition member that divides a liquid chamber inside the first attachment member, in which liquid is sealed, into a main liquid chamber and a sub-liquid chamber. A restriction passage through which the main liquid chamber and the sub-liquid chamber communicate with each other is formed in the partition member. In this vibration-damping device, when vibration is input, both the attachment members are relatively displaced while causing the elastic body to be elastically deformed. Consequently, the liquid pressure in the main liquid chamber fluctuates, and the liquid flows in the restriction passage, so that vibration is absorbed and attenuated.

In this vibration-damping device, for example, when a significant load (vibration) is input due to unevenness or the like on a road surface, the liquid pressure in the main liquid chamber increases, and then a load is input in the opposite direction due to a rebound or the like of the elastic body, the main liquid chamber is under a negative pressure and the liquid flows into the main liquid chamber. In this case, cavitation in which many air bubbles are generated in the liquid occurs. Thereafter, sometimes an allophone is generated due to a collapse of cavitation in which the generated air bubbles collapse. When a collapse of cavitation occurs, shock waves accompanying the collapse are propagated to the first attachment member via the liquid. As a result, an allophone is generated.

Therefore, for example, as in the vibration-damping device disclosed in Patent Document 1, a configuration in which a valve body is provided inside a restriction passage is known. In this vibration-damping device, when vibration having a significant amplitude is input, the main liquid chamber is restrained from being under a negative pressure, so that the occurrence of cavitation can be restrained.

### Citation List

### Patent Document

[Patent Document 1] Japanese Unexamined Patent Application, First Publication No. 2012-172832

### Summary of Invention

### Technical Problem

In order to restrain cavitation from occurring in a vibration-damping device, the inventor of this application has analyzed a process in which cavitation occurs. In the analysis, cavitation was reenacted in a vibration-damping device provided with no countermeasure for cavitation. At that time, relative displacement amounts of both attachment members and a liquid pressure in a main liquid chamber were measured. In addition, in order to detect a collapse of cavitation, the degree of a shock wave propagated to a first attachment member was measured as acceleration.

Moreover, in order to observe states of the occurrence and collapse of cavitation, the first attachment member was formed of an acryl resin such that the main liquid chamber was visually recognizable from outside.

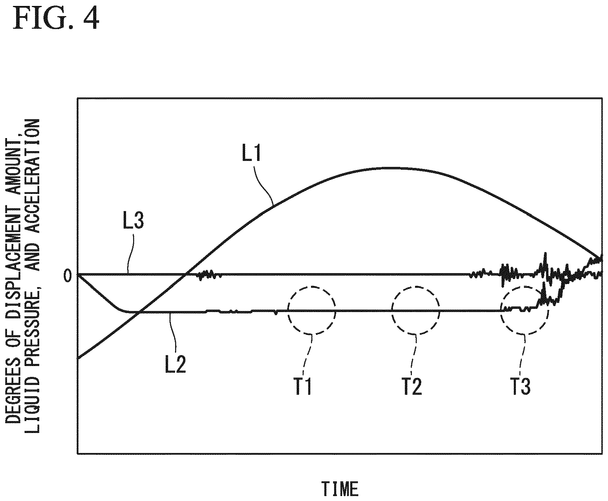

The graph in FIG. 4 illustrates the result thereof. The horizontal axis of the graph indicates a time showing that time elapses from the left side to the right side of the horizontal axis. A line L1 of graph lines recorded in the graph indicates the relative displacement amounts of both the attachment members at each time. A line L2 indicates the liquid pressure in the main liquid chamber at each time. A line L3 indicates acceleration (degree) of a shock wave propagated to the first attachment member at each time. The vertical axis of the graph indicates the degrees of the displacement amount, the liquid pressure, and the acceleration. The fiducial point zero is indicated in the middle of the vertical axis. With respect to the fiducial point, the upper side indicates a positive side and the lower side indicates a negative side. A displacement amount having a positive value denotes that both the attachment members are relatively displaced in a direction in which the main liquid chamber is under a negative pressure.

As indicated with the line L1 in FIG. 4, this graph illustrates a vibration-damping device during a period after both the attachment members have been relatively displaced in the direction in which the main liquid chamber is under a negative pressure until both the attachment members are displaced back and the liquid pressure in the main liquid chamber starts to be increased. It was confirmed that when both the attachment members start to be displaced back, acceleration (degree) of a shock wave fluctuates and a collapse of cavitation occurs, as indicated with the line L3.

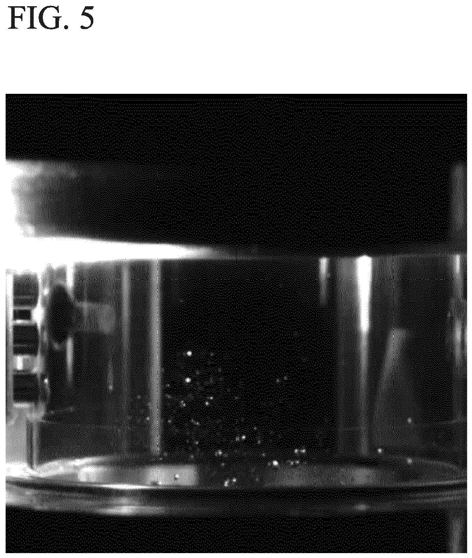

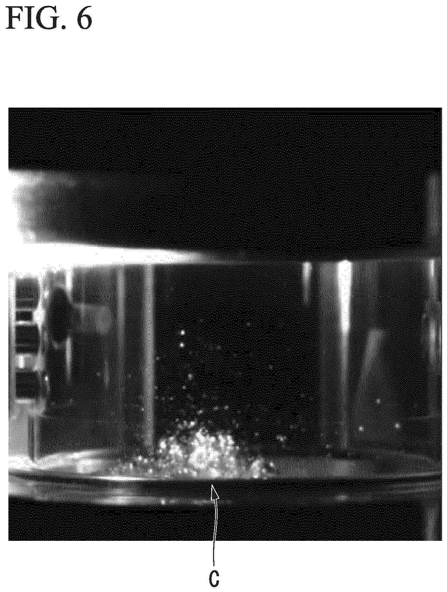

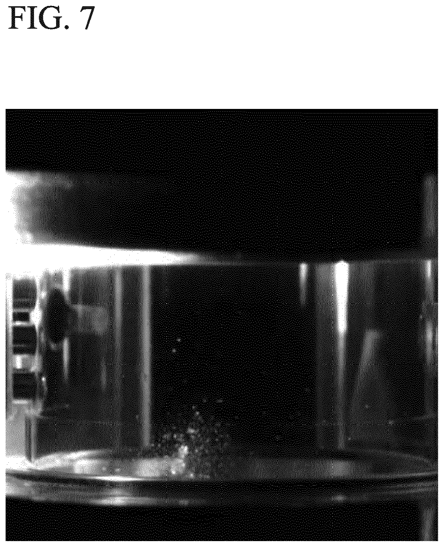

The state of a collapse of cavitation can also be confirmed from FIGS. 5 to 7, which are photographs showing states of the main liquid chamber at each time. FIGS. 5 to 7 are photographs showing the states of the main liquid chamber at each of times T1, T2, and T3 illustrated in FIG. 4. In FIG. 5 corresponding to the time T1, air bubbles due to cavitation are not generated. In FIG. 6 corresponding to the time T2, air bubbles are generated about a position indicated with a reference sign C in the diagram. In FIG. 7 corresponding to the time T3, it was confirmed that air bubbles collapse. It was confirmed that both the attachment members start to be displaced back at the time T3 and a collapse of cavitation occurs at this timing.

In a vibration-damping device of this kind, when vibration is input, the liquid pressure in the main liquid chamber normally fluctuates in accordance with the relative displacement amounts of both the attachment members. Therefore, if this displacement amount increases, the liquid pressure in the main liquid chamber significantly fluctuates, so that the degree of a negative pressure in the main liquid chamber is likely to increase.

However, the inventor of this application has found that if both the attachment members are displaced in a relatively significant manner as that at the time of the foregoing analysis to an extent that the main liquid chamber is under a negative pressure until cavitation can occur, the liquid pressure in the main liquid chamber settles within a uniform range without following the relative displacement of both the attachment members, as indicated with the line L2 in FIG. 4. In this case, cavitation occurs as illustrated in FIG. 6.

The present invention has been made in consideration of the foregoing circumstances, and an object thereof is to provide a vibration-damping device in which the occurrence of cavitation can be restrained.

### Solution to Problem

According to a first aspect of the present invention, a liquid-sealed vibration-damping device is provided, including a tubular first attachment member that is coupled to any one of a vibration-generating portion and a vibration-receiving portion; a second attachment member that is coupled to the other one of the vibration-generating portion and the vibration-receiving portion; an elastic body that couples both the attachment members to each other; and a partition member that divides a liquid chamber inside the first attachment member into a main liquid chamber having the elastic body as a part of a wall surface, and a sub-liquid chamber. A restriction passage through which the main liquid chamber and the sub-liquid chamber communicate with each other is formed in the partition member. The partition member is provided with a flow-speed restraint portion which restrains a flow speed of liquid flowing in the restriction passage. The flow-speed restraint portion restrains a peak flow speed of the liquid flowing into the main liquid chamber from the restriction passage to 10 m/sec or lower, when a liquid pressure in the main liquid chamber is a negative pressure and a fluctuation rate of the liquid pressure within a predetermined time is 5% or lower.

### Advantageous Effects of Invention

In the vibration-damping device according to the present invention, the occurrence of cavitation can be restrained.

### Brief Description of Drawings

FIG. 1 is a longitudinal sectional view of a vibration-damping device according to a first embodiment of the present invention.
FIG. 2 is a plan view of a partition member illustrated in FIG. 1.
FIG. 3 is a plan view of a partition member constituting a vibration-damping device according to a second embodiment of the present invention.
FIG 4 is a graph illustrating an analysis result of a process in which cavitation occurs.
FIG. 5 is a photograph showing a state of a main liquid chamber at a time T1 illustrated in FIG. 4.
FIG. 6 is a photograph showing a state of the main liquid chamber at a time T2 illustrated in FIG. 4.
FIG. 7 is a photograph showing a state of the main liquid chamber at a time T3 illustrated in FIG. 4.
FIG. 8 is a plan view illustrating a first modification example of a flow-speed restraint portion.
FIG. 9 is a plan view illustrating a second modification example of the flow-speed restraint portion.
FIG. 10 is a perspective view illustrating a third modification example of the flow-speed restraint portion.

### Description of Embodiments

### (First Embodiment)

Hereinafter, a first embodiment of a vibration-damping device according to the present invention will be described based on the drawings.

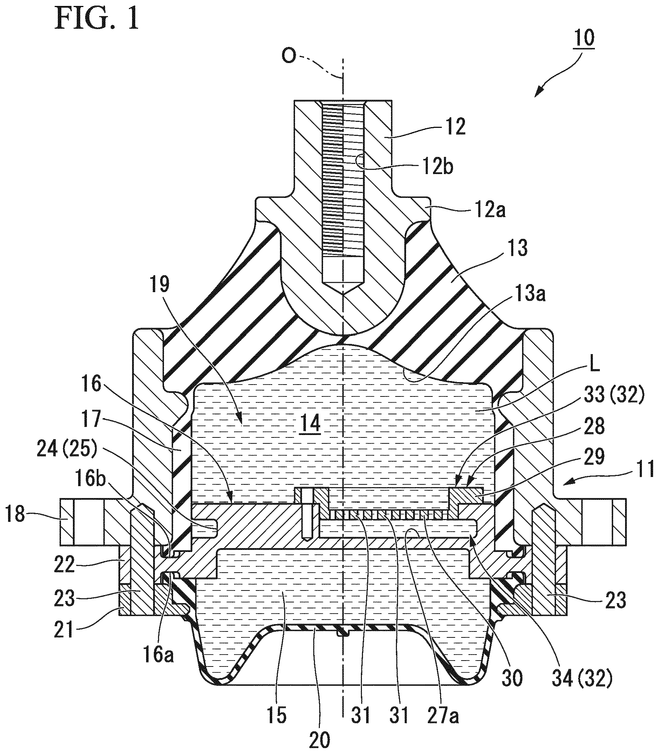

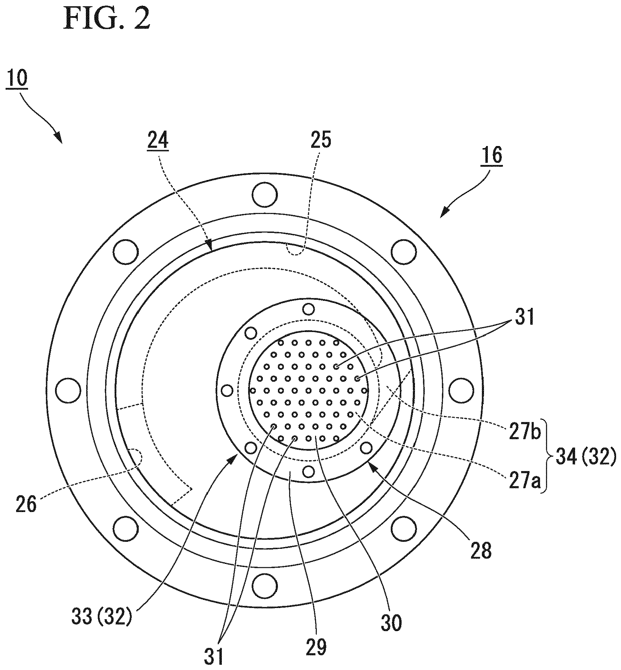

FIG. 1 is a longitudinal sectional view of a vibration-damping device 10 of the present embodiment cut along an axial center O. FIG. 2 is a plan view of a partition member.

The reference sign O illustrated in FIG. 1 indicates a central axis line of the vibration-damping device 10 and will hereinafter be simply referred to as the "axial center O". In addition, a direction along the axial center O is referred to as an "axial direction", a direction orthogonal to the axial center O is referred to as a "radial direction", and a direction around the axial center O is referred to as a "circumferential direction".

As illustrated in FIG. 1, the vibration-damping device 10 includes a tubular first attachment member 11 that is coupled to any one of a vibration-generating portion and a vibration-receiving portion; a second attachment member 12 that is coupled to the other one of the vibration-generating portion and the vibration-receiving portion; an elastic body 13 that elastically couples the first attachment member 11 and the second attachment member 12 to each other; and a partition member 16 that divides the inside of the first attachment member 11 into a main liquid chamber 14 and a sub-liquid chamber 15 (which will be described below). Each of these members is formed to have a circular shape or a toric shape in a plan view state and is disposed coaxially with the axial center O. Hereinafter, the second attachment member 12 side along the axial direction is referred to as an upper side, and the partition member 16 side is referred to as a lower side.

For example, in a case where this vibration-damping device 10 is mounted in an automobile, the second attachment member 12 is coupled to an engine, which is the vibration-generating portion, and the first attachment member 11 is coupled to a vehicle body, which is the vibration-receiving portion. Accordingly, vibration of the engine is restrained from being transmitted to the vehicle body.

The second attachment member 12 is a column member extending in the axial direction. A lower end portion of the second attachment member 12 is formed to have a hemispherical surface shape. The second attachment member 12 has a brim portion 12a positioned above the lower end portion of the second attachment member 12. The second attachment member 12 is provided with a screw hole 12b extending downward from an upper end surface of the second attachment member 12. A bolt (not illustrated), which is an attachment tool on the engine side, is screwed into the screw hole 12b. The second attachment member 12 is disposed in an upper end opening portion of the first attachment member 11.

The elastic body 13 is subjected to vulcanized adhesion with respect to each of an inner circumferential surface of the upper end opening portion of the first attachment member 11 and an outer circumferential surface of the lower end portion of the second attachment member 12. The elastic body 13 is a rubber body interposed between the inner circumferential surface and the outer circumferential surface. The elastic body 13 blocks the upper end opening portion of the first attachment member 11. An upper end portion of the elastic body 13 is subjected to vulcanized adhesion with respect to the brim portion 12a. Accordingly, the elastic body 13 adheres to the second attachment member 12 in a sufficiently tight manner and favorably follows displacement of the second attachment member 12. A rubber film 17 liquid-tightly covering the inner circumferential surface of the first attachment member 11 is integrally formed in the lower end portion of the elastic body 13. An elastic body formed of a synthetic resin can also be used as the elastic body 13, in addition to that formed of rubber.

The first attachment member 11 is formed to have a cylindrical shape having a flange 18 in the lower end portion. The first attachment member 11 is coupled to the vehicle body or the like, which is the vibration-receiving portion, via the flange 18. The upper end opening portion of the first attachment member 11 is blocked by the elastic body 13 as described above. A liquid chamber 19 is formed below the elastic body 13 in the first attachment member 11. In the present embodiment, the partition member 16 is provided in a lower end opening portion of the first attachment member 11. Moreover, a diaphragm 20 is provided below the partition member 16.

The diaphragm 20 is formed to have a bottomed cylindrical shape formed of an elastic material such as rubber or a soft resin. The upper end portion of the diaphragm 20 liquid-tightly engages with a toric attachment groove 16a formed in the partition member 16. The outer circumferential surface of the upper end portion of the diaphragm 20 is pressed to the partition member 16 side (the upper side) by a ring-shaped holding tool 21. A flange portion 22 is formed on the outer circumferential surface of the partition member 16. The holding tool 21 is brought into contact with the flange portion 22.

The flange portion 22 and the holding tool 21 of the partition member 16 are brought into contact with a lower end opening edge of the first attachment member 11 in this order. The first attachment member 11, the flange portion 22, and the holding tool 21 are fixed by using a plurality of screws 23. Accordingly, the diaphragm 20 is attached to the lower end portion of the first attachment member 11 via the partition member 16, and the liquid chamber 19 is formed inside the first attachment member 11. The liquid chamber 19 is installed inside the first attachment member 11, that is, on an inner side of the first attachment member 11 in a plan view. The liquid chamber 19 is provided in a state of being liquid-tightly blocked between the elastic body 13 and the diaphragm 20. Liquid L is sealed in (fills) the liquid chamber 19.

Ethylene glycol, water, silicone oil, or the like is used as the liquid L.

The liquid chamber 19 is divided into the main liquid chamber 14 and the sub-liquid chamber 15 by the partition member 16. The main liquid chamber 14 is formed to have a lower end surface 13a of the elastic body 13 as a part of a wall surface. The main liquid chamber 14 is a space surrounded by the elastic body 13, the rubber film 17, and the partition member 16. The inner volume of main liquid chamber 14 changes due to deformation of the elastic body 13. The sub-liquid chamber 15 is a space surrounded by the diaphragm 20 and the partition member 16. The inner volume of the sub-liquid chamber 15 changes due to deformation of the diaphragm 20.

The vibration-damping device 10 having such a configuration is a compression-type vibration-damping device which is used by being attached such that the main liquid chamber 14 is positioned on the upper side in a vertical direction and the sub-liquid chamber 15 is positioned on the lower side in the vertical direction.

A holding groove 16b liquid-tightly holding the lower end portion of the rubber film 17 is formed on an upper surface of the partition member 16. Accordingly, a gap between the rubber film 17 and the partition member 16 is liquid-tightly blocked. A restriction passage 24 through which the main liquid chamber 14 and the sub-liquid chamber 15 communicate with each other is provided in the partition member 16.

The restriction passage 24 generates resonance (liquid-column resonance) when preset vibration is input to the vibration-damping device 10 and the liquid L flows through the restriction passage 24. The length of a flow channel and the cross-sectional area of the flow channel of the restriction passage 24 are set (tuned) such that the resonance frequency of the restriction passage 24 becomes the frequency of the preset vibration. Examples of the preset vibration include idle vibration (for example, a frequency ranging from 18 Hz to 30 Hz, and an amplitude of ±0.5 mm or smaller) and shake vibration (for example, a frequency of 14 Hz or lower, and the amplitude of ±0.5 mm or greater) having a frequency lower than that of the idle vibration.

As illustrated in FIGS. 1 and 2, the restriction passage 24 includes a circumferential groove 25 which is formed in the partition member 16, a communication port 26 through which the circumferential groove 25 and the sub-liquid chamber 15 communicate with each other, a vortex chamber 27a through which the circumferential groove 25 and the main liquid chamber 14 communicate with each other, and a rectification path 27b which connects the circumferential groove 25 and the vortex chamber 27a to each other. The circumferential groove 25 is formed on the outer circumferential surface of the partition member 16 throughout approximately half the circumference along the circumferential direction. The communication port 26 is formed in one end portion of the circumferential groove 25, and the vortex chamber 27a is formed in the other end portion of the circumferential groove 25. The communication port 26 is an opening portion of the restriction passage 24 on the sub-liquid chamber 15 side.

The vortex chamber 27a is a recessed portion open in the main liquid chamber 14 and is formed to have a substantially circular shape in a plan view.

The opening portion of the vortex chamber 27a is an opening portion of the restriction passage 24 on the main liquid chamber 14 side. A central axis of the vortex chamber 27a is eccentric with respect to the axial center O. The vortex chamber 27a forms a swirling flow of the liquid L in accordance with the flow speed of the liquid L flowing in from the rectification path 27b.

The rectification path 27b extends linearly. The rectification path 27b extends from the inner circumferential surface of the vortex chamber 27a along a tangential direction of this inner circumferential surface. Liquid flowing into the vortex chamber 27a from the rectification path 27b flows through the rectification path 27b and is rectified in this tangential direction. Thereafter, the liquid flows along the inner circumferential surface of the vortex chamber 27a and swirls.

A porous body 28 is fitted into the opening portion of the vortex chamber 27a. The porous body 28 is screwed to the partition member 16. The porous body 28 is formed of a metal or a resin having a disk shape. The porous body 28 has a flange portion 29 which comes into contact with an opening edge portion of the vortex chamber 27a and is screwed thereto, and a lid portion 30 which is fitted into the opening portion of the vortex chamber 27a and covers the vortex chamber 27a. A plurality of hole portions 31 are formed in the lid portion 30 in a parallel manner.

The hole portions 31 are formed to have a circular shape in a plan view. Through the hole portions 31, the porous body 28 communicates with a space positioned on the main liquid chamber 14 side and the porous body 28 communicates with a space positioned on the sub-liquid chamber 15 side, individually. These hole portions 31 are disposed throughout the entire area of the lid portion 30 in a zigzag manner. The central axis of each of the hole portions 31 lies along the axial direction. The inner diameter of each of the hole portions 31 is equally formed throughout the entire length. The multiple hole portions 31 are formed to have shapes and sizes equal to each other. For example, the size, the shape, the number, and the like of the hole portions 31 can be suitably changed by increasing the sum total of the opening areas of the multiple hole portions 31 to be greater than the minimum value of the cross-sectional area of the flow channel of the restriction passage 24.

In the present embodiment, the partition member 16 is provided with a flow-speed restraint portion 32 which restrains the flow speed of the liquid L flowing in the restriction passage 24. The flow-speed restraint portion 32 reduces the flow speed of the liquid L by narrowing the cross-sectional area of the flow channel of the restriction passage 24 to generate resistance to the liquid L.

The flow-speed restraint portion 32 includes a first restraint portion 33 and a second restraint portion 34. The first restraint portion 33 is formed by the porous body 28. The second restraint portion 34 is formed by the rectification path 27b and the vortex chamber 27a.

The flow-speed restraint portion 32 is installed in the restriction passage 24. The flow-speed restraint portion 32 is disposed on the main liquid chamber 14 side of a middle part of the restriction passage 24 along a flow channel direction of the restriction passage 24. In the illustrated example, both the first restraint portion 33 and the second restraint portion 34 are disposed on the main liquid chamber 14 side of this middle part. The flow-speed restraint portion 32 is disposed in an end portion of the restriction passage 24 on the main liquid chamber 14 side.

In the vibration-damping device 10, when vibration is input, both the attachment members 11 and 12 are relatively displaced while causing the elastic body 13 to be elastically deformed. Consequently, the liquid pressure in the main liquid chamber 14 fluctuates, and the liquid L inside the main liquid chamber 14 flows into the sub-liquid chamber 15 through the restriction passage 24. In addition, the liquid L inside the sub-liquid chamber 15 flows into the main liquid chamber 14 through the restriction passage 24. That is, a part of the liquid L inside the sub-liquid chamber 15 returns to the main liquid chamber 14.

In a case where input vibration is the foregoing preset vibration, resonance (liquid-column resonance) is generated inside the restriction passage 24, so that the vibration is absorbed and attenuated. In this case, the second restraint portion 34 (the rectification path 27b and the vortex chamber 27a) functions as a part of the restriction passage 24. The cross-sectional area of the flow channel or the length of the flow channel of each of the hole portions 31 of the first restraint portion 33 is set such that resonance of the liquid L inside the restriction passage 24 is not hindered.

On the other hand, if input vibration is different from the foregoing preset vibration, that is, if vibration having an amplitude greater than that of this vibration is input, for example, both the attachment members 11 and 12 are displaced in a relatively significant manner. If both the attachment members 11 and 12 are displaced in a relatively significant manner to an extent that the main liquid chamber 14 is under a negative pressure until cavitation can occur, the liquid pressure in the main liquid chamber 14 settles within a uniform range at a negative pressure, so that the fluctuation rate of the liquid pressure within a predetermined time becomes 5% or lower.

The inventor of this application has found that the occurrence of cavitation depends on a peak flow speed of the liquid L flowing into the main liquid chamber 14 from the restriction passage 24 when the liquid pressure in the main liquid chamber 14 settles within a uniform range at a negative pressure. Thus, the inventor has conceived that the occurrence of cavitation is restrained by restraining this peak flow speed.

In the present embodiment, the flow-speed restraint portion 32 restrains the peak flow speed of the liquid L flowing into the main liquid chamber 14 from the restriction passage 24, when the liquid pressure in the main liquid chamber 14 is a negative pressure and the fluctuation rate of the liquid pressure within the predetermined time is 5% or lower (which will hereinafter be referred to as "when being in a stable state of a negative pressure") to 10 m/sec (m/second) or lower.

For example, the predetermined time can be set to 1/3 of one cycle of input vibration. The peak flow speed is the maximum flow speed of the liquid L during a period in which the liquid pressure in the main liquid chamber 14 is in a stable state of a negative pressure. For example, measurement of the flow speed of the liquid L can be performed by providing the first attachment member 11 formed of a permeable material (for example, an acryl resin), and then performing image analysis of an image of the main liquid chamber 14 captured from outside using a camera.

In the present embodiment, after the second restraint portion 34 restrains the flow speed of the liquid L inside the sub-liquid chamber 15 flowing into the main liquid chamber 14 through the restriction passage 24, the first restraint portion 33 further restrains the flow speed of the liquid L. That is, the peak flow speed is restrained due to operations of both the first restraint portion 33 and the second restraint portion 34.

In the second restraint portion 34, first, the liquid L flows into the vortex chamber 27a from the rectification path 27b. In this case, if the flow speed of the liquid L is increased to a certain speed or higher, a swirling flow of the liquid L is formed inside the vortex chamber 27a. As a result, for example, the flow speed of the liquid L is reduced due to an energy loss caused by viscous resistance of the liquid L or by forming a swirling flow, or an energy loss caused by friction between the liquid L and the wall surface of the vortex chamber 27a. When the flow speed of the liquid L flowing into the vortex chamber 27a is low, the liquid L is restrained from swirling inside the vortex chamber 27a. Therefore, the flow speed is restrained from being excessively reduced by the second restraint portion 34.

In the first restraint portion 33, the porous body 28 becomes resistance to the liquid L, so that the flow speed of the liquid L is restrained. The flow speed of the liquid L is accurately restrained based on the size, the shape, the number, and the like of the hole portions 31.

As described above, in the vibration-damping device 10 according to the present embodiment, the peak flow speed is restrained to 10 m/sec or lower by the flow-speed restraint portion 32 when vibration having a significant amplitude is input to an extent that the main liquid chamber 14 is under a negative pressure until cavitation can occur, and when the liquid pressure in the main liquid chamber 14 is in a stable state of a negative pressure. Accordingly, the occurrence of cavitation can be restrained. For example, generation of an allophone can be restrained. That is, in a case where the peak flow speed is higher than 10 m/sec, there is a possibility that cavitation will occur. When an analysis, of which the result is shown in FIG. 4, was performed, it was confirmed that the peak flow speed was 12 m/sec and cavitation occurred consequently.

Table 1 shows a result of the image analysis described above regarding the presence or absence of the generation of bubbles in a case where the peak flow speed was changed from a small value to a large value. At this time, the vibration frequency was 13 Hz and ethylene glycol was used as the liquid L.

**[Table 1]**

| Peak flow speed [m/sec] | State of bubbles |
|---|---|
| 1.514976 | Absent |
| 2.800551 | Small bubbles are slightly observed |
| 3.058716 | Small bubbles are slightly observed |
| 3.59149 | Generated |
| 3.586132 | Generated |
| 3.730659 | Generated |

From Table 1, the generation of bubbles was recognized in a case where the peak flow speed was 3.59149 m/sec or higher. Therefore, bubbles were not generated in a case where the value of the peak flow speed was smaller than 3.3 m/sec. Accordingly, in a case where the value of the peak flow speed was smaller than 3.3 m/sec, it can be ascertained that there is no possibility of the occurrence of cavitation.

Therefore, since the peak flow speed can be restrained to a value smaller than 3.3 m/sec by the flow-speed restraint portion 32, the occurrence of cavitation can be restrained. For example, generation of an allophone can be restrained.

### (Second Embodiment)

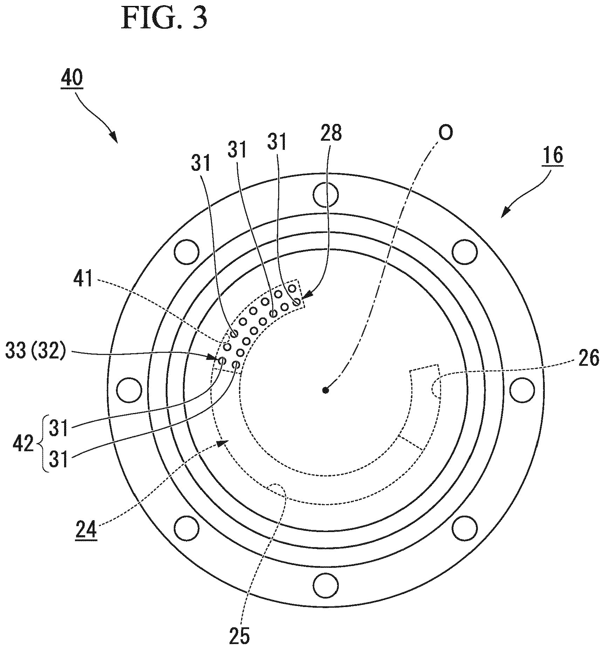

Next, a vibration-damping device in a second embodiment according to the present invention will be described with reference to FIG. 3.

FIG. 3 is a plan view of a partition member.

In the second embodiment, the same reference signs are applied to the same constituent elements as in the first embodiment. Description thereof will be omitted, and only the different points will be described.

In a vibration-damping device 40 according to the present embodiment, in place of the configuration in which the flow-speed restraint portion 32 includes both the first restraint portion 33 and the second restraint portion 34, the flow-speed restraint portion 32 includes only the first restraint portion 33. The first restraint portion 33 restrains the peak flow speed alone to 10 m/sec or lower.

In place of the rectification path 27b and the vortex chamber 27a, the restriction passage 24 includes a connection port 41 through which the circumferential groove 25 and the main liquid chamber 14 communicate with each other. The connection port 41 is an opening portion of the restriction passage 24 on the main liquid chamber 14 side.

The porous body 28 is integrally formed with the partition member 16. The porous body 28 has a shape and a size equal to those of the connection port 41 in a plan view of the partition member 16. An outer circumferential edge of the porous body 28 is coupled to an inner circumferential edge of the connection port 41 throughout the entire circumference.

A plurality of the hole portions 31 are disposed at intervals in the radial direction. The hole portions 31 disposed at intervals in the radial direction form hole rows 42. In the present embodiment, the hole portions 31 form a plurality (two) of hole rows 42. The plurality of the hole portions 31 (the hole rows 42) are disposed at intervals in the circumferential direction.

As described above, in the vibration-damping device 40 according to the present embodiment, it is possible to exhibit operational effects similar to those of the embodiment described above.

That is, similar to the first embodiment, even in the vibration-damping device 40 according to the second embodiment, since the flow-speed restraint portion 32 restrains the peak flow speed to 10 m/sec or lower, the occurrence of cavitation can be restrained. For example, generation of an allophone can be restrained.

Moreover, since the flow-speed restraint portion 32 restrains the peak flow speed to a value smaller than 3.3 m/sec, the occurrence of cavitation can be restrained. For example, generation of an allophone can be restrained.

The technical scope of the present invention is not limited to the embodiment described above, and various changes can be applied within a range not departing from the scope of the present invention.

The flow-speed restraint portion 32 may include both the first restraint portion 33 and the second restraint portion 34, may include only the first restraint portion 33, or may include only the second restraint portion 34.

The first restraint portion 33 and the second restraint portion 34 are not limited to the configuration illustrated in the embodiment described above.

The flow-speed restraint portion 32 can employ a form different from those of the first restraint portion 33 and the second restraint portion 34. For example, it is possible to employ a different form in which the cross-sectional area of the flow channel of the restriction passage 24 is narrowed to generate resistance to the liquid L.

The flow-speed restraint portion 32 does not have to be disposed in the end portion of the restriction passage 24 on the main liquid chamber 14 side.

The flow-speed restraint portion 32 does not have to be disposed at an intermediate position along the flow channel direction of the restriction passage 24.

In the embodiment described above, the partition member 16 is disposed in the lower end portion of the first attachment member 11, and the flange portion 22 of the partition member 16 is brought into contact with the lower end surface of the first attachment member 11. However, the present invention is not limited thereto. For example, the sub-liquid chamber 15 may be formed from the lower end portion of the first attachment member 11 to a bottom surface of the diaphragm 20 by disposing the partition member 16 above the lower end surface of the first attachment member 11 and installing the diaphragm 20 on the lower side of this partition member 16, that is, the lower end portion of the first attachment member 11.

In the embodiments described above, the compression-type vibration-damping devices 10 and 40 have been described. However, the present invention is not limited thereto. For example, the present invention can also be applied to a suspension-type vibration-damping device in which the main liquid chamber 14 is positioned on the lower side in the vertical direction, and the sub-liquid chamber 15 is attached to be positioned on the upper side of the vertical direction.

The vibration-damping devices 10 and 40 according to the present invention are not limited to an engine mount of a vehicle and can also be applied to a mount other than the engine mount. For example, the vibration-damping devices 10 and 40 can be applied to a mount of a generator installed in construction equipment or can be applied to a mount of a machine installed in a factory or the like as well.

Modification examples of the flow-speed restraint portion 32 will be described below.

In the following description, the same reference signs are applied to the same parts of the constituent elements in the first embodiment. Description thereof will be omitted, and only the different points will be described.

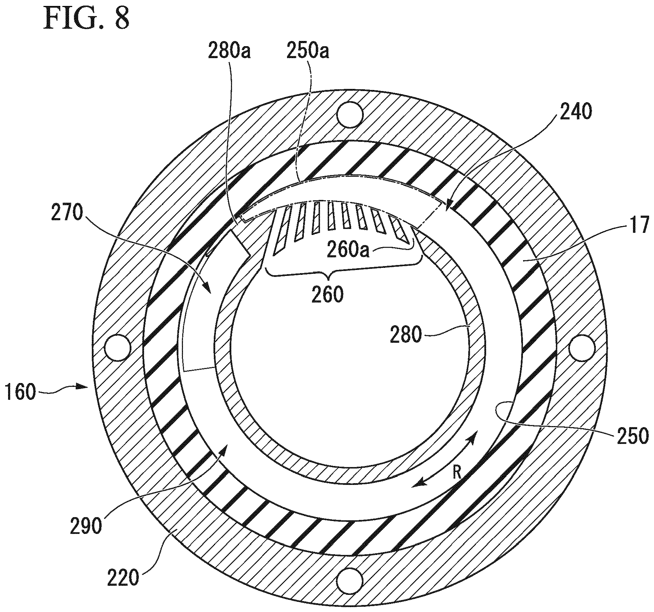

Flow-speed restraint portions 260, 261, 2600, and 2900 illustrated in FIGS. 8 to 10 are the modification examples of the flow-speed restraint portion 32.

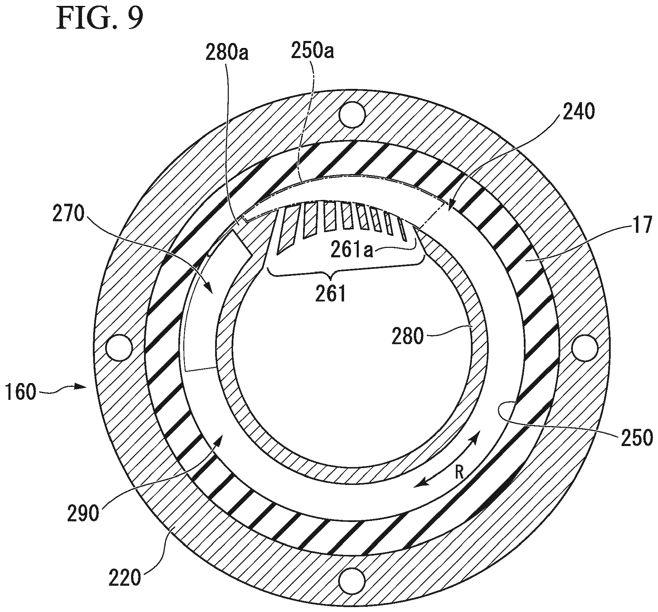

FIG. 8 illustrates a first modification example of the flow-speed restraint portion 260 constituted of a first communication portion 260. FIG. 9 illustrates a second modification example of the flow-speed restraint portion 261 constituted of a first communication portion 261.

In FIG 8, a restriction passage 240 includes a circumferential groove 250 which is disposed inside a partition member 160, the first communication portion 260 through which the circumferential groove 250 and the main liquid chamber 14 communicate with each other, and a second communication portion 270 through which the circumferential groove 250 and the sub-liquid chamber 15 communicate with each other.

The circumferential groove 250 extends along the circumferential direction inside the partition member 160, and a flow channel direction R of the circumferential groove 250 and the circumferential direction are directions equal to each other. The circumferential groove 250 is formed to have an arc shape disposed coaxially with the axial center O and extends along the circumferential direction throughout approximately the entire circumference. Both the end portions of the circumferential groove 250 along the circumferential direction are isolated from each other by a division wall 280a extending in the radial direction and the axial direction.

The circumferential groove 250 is defined by a first barrier wall 280 facing the main liquid chamber 14, a second barrier wall 290 facing the sub-liquid chamber 15, an upper flange portion (not illustrated), the rubber film 17, and the division wall 280a. The first barrier wall 280 and the second barrier wall 290 do not have to define the circumferential groove 250.

The first barrier wall 280 is formed to have a tubular shape extending downward from the inner circumferential edge of the upper flange portion. As illustrated in FIG. 8, on the outer circumferential surface of the first barrier wall 280, a part in which the first communication portion 260 is installed gradually faces the outer side in the radial direction while being distanced from the second communication portion 270 in the flow channel direction R. Accordingly, in the circumferential groove 250, a flow channel area of a connection part 250a with respect to the first communication portion 260 is gradually reduced while being distanced from the second communication portion 27 in the flow channel direction R.

The second barrier wall 290 is formed to have a plate shape of which front and rear surfaces are directed in the axial direction. The upper surface of the second barrier wall 290 and a lower end of the first barrier wall 280 are connected to each other. The first barrier wall 280 is sandwiched by the circumferential groove 250 and the main liquid chamber 14 in the radial direction and is positioned between the circumferential groove 250 and the main liquid chamber 14. The second barrier wall 290 is sandwiched by the circumferential groove 250 and the sub-liquid chamber 15 in the axial direction and is positioned between the circumferential groove 250 and the sub-liquid chamber 15.

The first communication portion 260 includes a plurality of fine holes 260a which penetrate the first barrier wall 280 in the radial direction and are disposed along the flow channel direction R. The plurality of fine holes 260a are disposed in a part forming the end portion on one side of the circumferential groove 250 along the circumferential direction in the first barrier wall 280.

The second communication portion 270 is an opening penetrating the second barrier wall 290 in the axial direction. The second communication portion 270 is disposed in a part forming the end portion on the other side of the circumferential groove 250 in the circumferential direction in the second barrier wall 290.

Each of the plurality of fine holes 260a is formed to have a rectangular parallelepiped shape. Each of the opening portions of the plurality of fine holes 260a facing the main liquid chamber 14 is formed to have a rectangular shape being longer in the axial direction than in the circumferential direction in a front view seen from the inner side in the radial direction. The cross-sectional area of the flow channel of each of the plurality of fine holes 260a is equally formed throughout the entire length of the flow channel of each of the fine holes 260a. The widths of the plurality of fine holes 260a in the circumferential direction are equal to each other. The plurality of fine holes 260a are disposed at intervals equal to each other in the circumferential direction.

In addition, the length of each of the plurality of fine holes 260a in the axial direction is reduced as the fine hole 260a is positioned away from the second communication portion 270 in the flow channel direction R. Accordingly, the projected area or the opening area of the smallest cross section of each of the plurality of fine holes 260a is reduced as the fine hole 260a is positioned away from the second communication portion 270 in the flow channel direction R. As a result, in the first barrier wall 280, the ratio of the projected area or the opening area of the smallest cross section of each of the fine holes 260a per predetermined area on the inner circumferential surface facing the main liquid chamber 14 is gradually reduced as the fine hole 260a is distanced from the second communication portion 270 in the flow channel direction R.

In addition, the length of the flow channel of each of the plurality of fine holes 260a is increased as the fine hole 260a is positioned away from the second communication portion 270 in the flow channel direction R.

According to those described above, resistance of each of the plurality of fine holes 260a when the liquid L flows in the fine hole 260a is increased as the fine hole 260a is positioned away from the second communication portion 270 in the flow channel direction R.

The "projected area" indicates a projected area directed in a direction in which the center line of the fine hole passing through the middle of the smallest cross section of the fine hole 260a extends toward a surface positioned inside the main liquid chamber 14 or inside the sub-liquid chamber 15 in the first barrier wall 280 or the second barrier wall 290.

In a vibration-damping device 100 having such a configuration, when vibration is input, both the attachment members 11 and 12 are relatively displaced while causing the elastic body 13 to be elastically deformed. Consequently, the liquid pressure in the main liquid chamber 14 fluctuates, and the liquid L inside the main liquid chamber 14 flows into the sub-liquid chamber 15 through the restriction passage 240. In addition, the liquid L inside the sub-liquid chamber 15 flows into the main liquid chamber 14 through the restriction passage 240. That is, a part of the liquid L inside the sub-liquid chamber 15 returns to the main liquid chamber 14. In this case, for example, a part of the liquid L evaporates and air bubbles are generated due to the main liquid chamber 14 under a negative pressure, thereby causing a collapse of cavitation. Alternatively, a flow of the liquid L, which flows in the circumferential groove 250 and is directed toward the first communication portion 260, passes through the plurality of fine holes 260a due to inertia. Thereafter, the liquid L collides with the division wall 280a and flows into the main liquid chamber 14 in a biased manner from the fine hole of the plurality of fine holes 260a positioned close to the division wall 280a. Therefore, the flow speed of the liquid L which has passed through the plurality of fine holes 260a is locally increased, so that there are cases where air bubbles are generated and a collapse of cavitation occurs.

In the vibration-damping device 100 according to the present embodiment, when the liquid L flows out to the main liquid chamber 14 from the circumferential groove 250 through the plurality of fine holes 260a, the liquid L flows in each of the fine holes 260a while causing a pressure loss due to the first barrier wall 280 in which these fine holes 260a are formed. Accordingly, the flow speed of the liquid L flowing in each of the fine holes 260a can be restrained from being increased. Moreover, since the liquid L flows in the plurality of fine holes 260a instead of a single fine hole 260a, the liquid L can flow in a plurality of branched holes. Therefore, the flow speed of the liquid L which has passed through each of the fine holes 260a can be reduced. Accordingly, the difference in the flow speed caused between the liquid L which has passed through the fine holes 260a and has flowed into the main liquid chamber 14 and the liquid L inside the main liquid chamber 14 can be minimized, so that generation of a vortex due to the difference between the flow speeds and generation of air bubbles due to this vortex can be restrained.

Moreover, in the first barrier wall 280, the ratio of the projected area or the opening area of the smallest cross section of each of the fine holes 260a per predetermined area on the inner circumferential surface facing the main liquid chamber 14 is gradually reduced as the fine hole 260a is distanced from the second communication portion 270 in the flow channel direction R. Therefore, when the liquid L flowing inside the restriction passage 240 arrives at the first communication portion 260 from the second communication portion 270, the liquid L can be restrained from passing through the fine hole 260a, of the plurality of fine holes 260a, positioned on the second communication portion 270 side in the flow channel direction R due to an inertial force on the fine hole 260a side positioned away from the second communication portion 270 in the flow channel direction R. Accordingly, the liquid L is likely to flow out from the fine hole 260a positioned on this second communication portion 270 side, so that the flow speed of the liquid L flowing out from each of the fine holes 260a becomes uniform to be restrained from being locally high. Therefore, it is possible to more effectively inhibit generation of air bubbles and generation of an allophone due to a collapse of cavitation.

In addition, the projected area or the opening area of the smallest cross section of each of the plurality of fine holes 260a is reduced as the fine hole 260a is positioned away from the second communication portion 270 in the flow channel direction R. Therefore, a structure in which in the first barrier wall 280 the ratio of the projected area or the opening area of the smallest cross section of each of the fine holes 260a per predetermined area on the inner circumferential surface facing the main liquid chamber 14 is gradually reduced as the fine hole 260a is distanced from the second communication portion 270 in the flow channel direction R can be reliably realized in a simple configuration.

In addition, the length of the flow channel of each of the plurality of fine holes 260a is increased as the fine hole 260a is positioned away from the second communication portion 270 in the flow channel direction R. Therefore, it is possible to increase a pressure loss of the liquid L flowing in the fine hole 260a, of the plurality of fine holes 260a, positioned away from the second communication portion 270 in the flow channel direction R. Therefore, a large amount of liquid can be restrained from flowing out at a high speed from the fine hole 260a, of the plurality of fine holes 260a, positioned away from the second communication portion 270 in the flow channel direction R.

In addition, in the circumferential groove 250, the flow channel area of the connection part 250a with respect to the first communication portion 260 is gradually reduced while being distanced from the second communication portion 270 in the flow channel direction R. Therefore, flow resistance gradually increases during a process while the liquid L flows in the connection part 250a, so that the flow speed of the liquid L is restrained. Accordingly, the liquid L is inhibited from passing through the fine hole 260a positioned on the second communication portion 270 side in the flow channel direction R due to inertia, so that the liquid is likely to flow out from the fine hole 260a on the second communication portion 270 side. Therefore, a large amount of the liquid L can be reliably restrained from flowing out at a high speed from the fine hole 260a positioned away from the second communication portion 270 in the flow channel direction R.

In the second modification example of the flow-speed restraint portion 261 illustrated in FIG. 9, a plurality of fine holes 261a are disposed at different intervals in the circumferential direction.

In the second modification example of the flow-speed restraint portion 261 illustrated in FIG. 9, the intervals at which the plurality of fine holes 261a are disposed in the circumferential direction are not uniform. Specifically, the interval between the fine holes 261a adjacent to each other in the flow channel direction R becomes gradually wide while being distanced from the second communication portion 270 in the flow channel direction R.

In such a configuration, the interval between the fine holes 261a adjacent to each other in the flow channel direction R becomes gradually wide while being distanced from the second communication portion 270 in the flow channel direction R. Therefore, a structure in which in the first barrier wall 280 the ratio of the projected area or the opening area of the smallest cross section of each of the fine holes 261a per predetermined area on the inner circumferential surface facing the main liquid chamber 14 is gradually reduced as the fine hole 261a is distanced from the second communication portion 270 in the flow channel direction R can be reliably realized in a simple configuration.

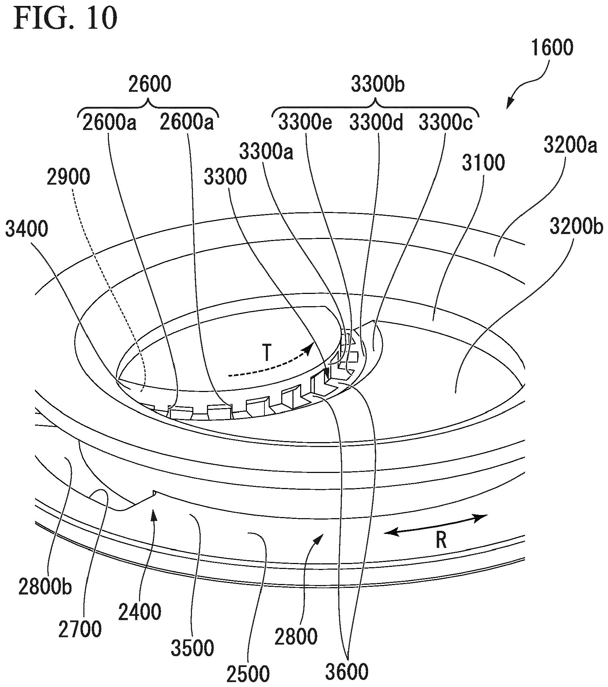

FIG 10 is a perspective view illustrating a third modification example of flow-speed restraint portions 2600 and 2900 constituted of a first communication portion 2600 and a vortex chamber 2900. As illustrated in FIG. 10, a circumferential groove 2500 includes a rectification path 2800 and the vortex chamber 2900. The rectification path 2800 is formed to have a circumferential groove shape on the outer circumferential surface of a partition member 1600. The rectification path 2800 extends throughout at least half the circumference or longer on the outer circumferential surface of the partition member 1600. The rectification path 2800 is formed in an outer circumferential portion 3200a which is formed between a side surface of a recessed portion 3100 formed on the upper surface of the partition member 1600, and the outer circumferential surface of the partition member 16. In the rectification path 2800, the flow channel direction R of a restriction passage 2400 is the circumferential direction.

The vortex chamber 2900 is provided in a first end portion (not illustrated) of two end portions of the rectification path 2800 in the circumferential direction. The first end portion is a connection part with respect to the vortex chamber 2900 in the rectification path 2800.

As illustrated in FIG. 10, the cross-sectional area of the flow channel of the first end portion (not illustrated) is reduced while being distanced from the second communication portion 2700 along the flow channel direction R. The first end portion is reduced in the axial direction while being distanced from a second communication portion 2700 along the flow channel direction R.

As illustrated in FIG. 10, the vortex chamber 2900 is provided throughout a plate-shaped middle part 3200b blocking the insides of the outer circumferential portion 3200a and the outer circumferential portion 3200a. The vortex chamber 2900 is formed to have a circular shape in a top view. The inner circumferential surface of the vortex chamber 2900 forms the outer circumferential edge of the vortex chamber 2900 in a top view. The diameter of the vortex chamber 2900 is smaller than the diameter of the partition member 1600, and the central axis line of the vortex chamber 2900 is eccentric with respect to the axial center O. In a top view, the outer circumferential edge of the vortex chamber 2900 is internally in contact with the outer circumferential surface of the partition member 1600.

The vortex chamber 2900 forms a swirling flow of the liquid L in accordance with the flow speed of the liquid L from the rectification path 2800. When the flow speed of the liquid L flowing into the vortex chamber 2900 is low, the liquid L is restrained from swirling inside the vortex chamber 2900, but when the flow speed of the liquid L is high, a swirling flow of the liquid L is formed inside the vortex chamber 2900. A swirling flow swirls along a direction around the central axis line of the vortex chamber 2900. That is, a swirling direction T of a swirling flow of the liquid L formed in the vortex chamber 2900 becomes a direction around the central axis line of the vortex chamber 2900 in a plan view of a vibration-damping device 1000 seen in the axial direction.

A front side along the swirling direction T becomes the counterclockwise side in a top view, and a rear side along the swirling direction T becomes the clockwise side in a top view. Hereinafter, in a plan view of the vibration-damping device 1000 seen in the axial direction, a direction orthogonal to the central axis line of the vortex chamber 2900 will be referred to as a swirling radial direction.

As illustrated in FIG. 10, a groove portion 3300 is formed on the bottom surface of the recessed portion 3100. The groove portion 3300 extends along the swirling direction T. The groove portion 3300 is formed to have an arc shape in a top view. In a top view, the groove portion 3300 is disposed along the outer circumferential edge of the vortex chamber 2900. In a top view, both end portions of the groove portion 3300 reach the side surfaces of the recessed portion 3100, and the groove portion 3300 divides the bottom surface of the recessed portion 3100 into two regions.

As illustrated in FIG. 10, in the side surfaces of the groove portion 3300, a first side surface 3300a facing the outer side in the swirling radial direction extends in a manner parallel to the axial direction. In the side surfaces of the groove portion 3300, a second side surface 3300b facing the inner side in the swirling radial direction includes an inclination surface 3300c, a horizontal surface 3300d, and a vertical surface 3300e. The inclination surface 3300c, the horizontal surface 3300d, and the vertical surface 3300e are provided downward from above in this order. The inclination surface 3300c gradually extends toward the inner side in the swirling radial direction while extending downward from above. The horizontal surface 3300d extends toward the inner side in the swirling radial direction from the lower end portion of the inclination surface 3300c. The vertical surface 3300e extends downward from the end portion of the horizontal surface 3300d on the inner side in the swirling radial direction. The bottom surface of the groove portion 3300 is disposed to be flush with the lower surface of the vortex chamber 2900.

As illustrated in FIG. 10, the partition member 1600 includes a first barrier wall 3400 facing the main liquid chamber 14, and a second barrier wall 3500 facing the sub-liquid chamber 15. The first barrier wall 3400 is formed by a part positioned between the inner circumferential surface of the vortex chamber 2900 and the first side surface 3300a, in the partition member 1600. The first barrier wall 3400 extends along the swirling direction T. The second barrier wall 3500 is formed by a part positioned between the inner surface of the rectification path 2800 and the lower surface of the partition member 1600, in the partition member 1600. The second barrier wall 3500 extends along the flow channel direction R.

The first communication portion 2600 is formed in the first barrier wall 3400 and is open in the main liquid chamber 14. The second communication portion 2700 is formed in the second barrier wall 3500 and is open in the sub-liquid chamber 15.

At least one of the first communication portion 2600 and the second communication portion 2700 includes a plurality of fine holes 2600a penetrating the first barrier wall 3400 or the second barrier wall 3500. In the example illustrated in FIG. 10, the first communication portion 2600 includes the plurality of fine holes 2600a penetrating the first barrier wall 3400.

The plurality of fine holes 2600a are disposed in the first barrier wall 3400 along the swirling direction T. The plurality of fine holes 2600a are disposed at intervals in the swirling direction T. The fine holes 2600a penetrate the first barrier wall 3400 in the swirling radial direction. Each of the opening portions of the plurality of fine holes 2600a facing the main liquid chamber 14 is formed to have a rectangular shape extending in the axial direction in a front view seen from the outer side in the swirling radial direction. The lower end portions of the fine holes 2600a are positioned on the lower surface of the vortex chamber 2900 (the bottom surface of the groove portion 3300). The cross-sectional area of the flow channel of each of the plurality of fine holes 2600a gradually increases toward the outer side from the inner side in the length direction of the flow channel (in the illustrated example, the swirling radial direction) of each of the fine holes 2600a.

The ratio of the opening area or the projected area of the smallest cross section in each of the fine holes 2600a per predetermined area in the first barrier wall 3400 gradually increases toward the front side from the rear side in the swirling direction T. The "projected area" indicates a projected area directed in a direction in which the center line of the fine hole passing through the middle of the smallest cross section of the fine hole 2600a extends toward a surface positioned inside the main liquid chamber 14 in the first barrier wall 3400. In the example illustrated in FIG. 10, the "projected area" indicates a projected area of the fine holes 2600a in the swirling radial direction (the length direction of the flow channel) to the first side surface 3300a of the smallest cross section.

In the present embodiment, the widths of the plurality of fine holes 2600a in the circumferential direction are equal to each other. The plurality of fine holes 2600a are disposed at intervals equal to each other in the circumferential direction. The length of each of the plurality of fine holes 2600a in the axial direction gradually increases toward the front side from the rear side in the swirling direction T. Accordingly, the foregoing ratio gradually increases toward the front side from the rear side in the swirling direction T.

In the illustrated example, a part avoiding the fine holes 2600a in the first side surface 3300a is provided with a bridge portion 3600 connecting the first side surface 3300a and the second side surface 3300b to each other. The lower surface of the bridge portion 3600 is fixed to the bottom surface of the groove portion 3300, and the upper surface of the bridge portion 3600 is formed to be flush with the horizontal surface 3300d.

The second communication portion 2700 penetrates the second barrier wall 3500 in the axial direction. The second communication portion 2700 is formed to have a rectangular shape elongated in the flow channel direction R. The second communication portion 2700 is open in a second end portion 2800b of the rectification path 2800.

In the restriction passage 2400, the first communication portion 2600 and the second communication portion 2700 communicate with each other through the circumferential groove 2500. In the circumferential groove 2500, the vortex chamber 2900 is formed in the connection part with respect to the first communication portion 2600 which is at least one of the first communication portion 2600 and the second communication portion 2700. The vortex chamber 2900 forms a swirling flow of the liquid L in accordance with the flow speed of the liquid L from the second communication portion 2700 side which is the other side of the first communication portion 2600 and the second communication portion 2700, and this liquid L flows out through the fine holes 2600a.

In the vibration-damping device 1000 having such a configuration, when vibration is input, both the attachment members 11 and 12 are relatively displaced while causing the elastic body 13 to be elastically deformed. Consequently, the liquid pressure in the main liquid chamber 14 fluctuates, and the liquid L inside the main liquid chamber 14 flows into the sub-liquid chamber 15 through the restriction passage 2400. In addition, the liquid L inside the sub-liquid chamber 15 flows into the main liquid chamber 14 through the restriction passage 2400. That is, a part of the liquid L inside the sub-liquid chamber 15 returns to the main liquid chamber 14.

In the vibration-damping device 1000 according to the example illustrated in FIG. 10, in a case where a significant load (vibration) is input to the vibration-damping device 1000, and when the liquid L flows into the vortex chamber 2900 from the second communication portion 2700 side, if the flow speed of the liquid L is sufficiently high and a swirling flow of the liquid L is formed inside the vortex chamber 2900, for example, a pressure loss of the liquid L can be increased due to an energy loss caused by forming this swirling flow, or an energy loss caused by friction between the liquid L and the wall surface of the vortex chamber 2900. Moreover, when the liquid L flows out through the plurality of fine holes 2600a, while the liquid L causing a pressure loss due to the first barrier wall 3400 in which these fine holes 2600a are formed, the liquid L flows in the fine holes 2600a, so that the flow speed of the liquid L flowing in the plurality of fine holes 2600a can be restrained from being increased. Moreover, since the liquid L flows in the plurality of fine holes 2600a instead of a single fine hole 2600a, the liquid L can flow in a plurality of branched holes. Therefore, the flow speed of the liquid L which has passed through each of the fine holes 2600a can be reduced. Accordingly, the difference in the flow speed caused between the liquid L which has passed through the fine holes 2600a and has flowed into the main liquid chamber 14 and the liquid L inside the main liquid chamber 14 can be minimized, so that generation of a vortex due to the difference between the flow speeds and generation of air bubbles due to this vortex can be restrained. Moreover, even if air bubbles are generated, since the plurality of fine holes 2600a are disposed, generated air bubbles can be separated from each other and can be easily maintained in a state where the air bubbles are restrained from being joined and growing such that the air bubbles are finely dispersed. In addition, even if air bubbles are generated inside the restriction passage 2400 instead of the main liquid chamber 14, the air bubbles are divided into small air bubbles and then can be dispersed, when the air bubbles pass through the fine holes 2600a.

As described above, generation of air bubbles itself can be restrained, and for example, even if air bubbles are generated, the air bubbles can be easily maintained in a state of being finely dispersed. Therefore, even if a collapse of cavitation in which air bubbles collapse occurs, generation of an allophone can be minimized.

In addition, if a swirling flow of the liquid L is formed inside the vortex chamber 2900, a pressure loss of the liquid L is caused. Therefore, the flow speed of the liquid L is gradually reduced toward the front side from the rear side in the swirling direction T. That is, if the liquid L forming a swirling flow is positioned closer to the rear side in the swirling direction T, the inertial force toward the outer side in the swirling radial direction increases.

The foregoing ratio gradually increases toward the front side from the rear side in the swirling direction T, and the foregoing ratio can be restrained on the rear side in the swirling direction T in which the flow speed of the liquid L is high. Therefore, due to an inertial force acting on the liquid L, the liquid L forming a swirling flow is restrained from flowing out from the vortex chamber 2900 through the fine hole 2600a, of the plurality of fine holes 2600a, positioned on the rear side in the swirling direction T, and the liquid L can also flow out from the fine hole 2600a positioned on the front side in the swirling direction T. Accordingly, a large amount of the liquid L can be restrained from locally flowing out at a high speed from the fine hole 2600a positioned on the rear side in the swirling direction T. Therefore, the liquid L can flow out from all of the plurality of fine holes 2600a while the flow speed is restrained from fluctuating, and generation of air bubbles can be effectively restrained.

In addition, since the projected area or the opening area of the smallest cross section of each of the plurality of fine holes 2600a increases as the fine hole 2600a is closer to the front side in the swirling direction T, it is possible to reliably realize a structure in which the foregoing ratio is gradually increased toward the front side from the rear side in the swirling direction T in a simple configuration.

In addition, since the cross-sectional area of the flow channel of the first end portion (not illustrated) is gradually reduced while being distanced from the second communication portion 2700 in the flow channel direction R, flow resistance gradually increases during a process while the liquid L flows in the first end portion, so that the flow speed of the liquid L is restrained. Accordingly, the flow speed of the liquid L flowing into the vortex chamber 2900 can be reduced, and the liquid L can be reliably restrained from flowing out from the fine hole 2600a positioned on the rear side in the swirling direction T due to inertia.

Furthermore, within a range not departing from the scope of the present invention, the constituent elements in the embodiments described above can be suitably replaced with known constituent elements. In addition, the foregoing modification examples may be suitably combined.

### Industrial Applicability

In a vibration-damping device according to the present invention, the occurrence of cavitation can be restrained.

### Reference Signs List

- 10, 40: vibration-damping device
- 11: first attachment member
- 12: second attachment member
- 13: elastic body
- 14: main liquid chamber
- 15: sub-liquid chamber
- 16: partition member
- 19: liquid chamber
- 24: restriction passage
- 27a: vortex chamber
- 27b: rectification path
- 28: porous body
- 32: flow-speed restraint portion
- 33: first restraint portion
- 34: second restraint portion
- L: liquid

## Claims

1. A liquid-sealed vibration-damping device, comprising:
a tubular first attachment member that is coupled to any one of a vibration-generating portion and a vibration-receiving portion;
a second attachment member that is coupled to the other one of the vibration-generating portion and the vibration-receiving portion;
an elastic body that couples both the attachment members to each other; and
a partition member that divides a liquid chamber inside the first attachment member into a main liquid chamber having the elastic body as a part of a wall surface, and a sub-liquid chamber,
wherein a restriction passage through which the main liquid chamber and the sub-liquid chamber communicate with each other is formed in the partition member,
wherein the partition member is provided with a flow-speed restraint portion which restrains a flow speed of liquid flowing in the restriction passage, and
wherein the flow-speed restraint portion restrains a peak flow speed of the liquid flowing into the main liquid chamber from the restriction passage to 10 m/sec or lower, when a liquid pressure in the main liquid chamber is a negative pressure and a fluctuation rate of the liquid pressure within a predetermined time is 5% or lower.

2. The vibration-damping device according to Claim 1,
wherein the flow-speed restraint portion includes a first restraint portion which is formed by a porous body installed in the restriction passage.

3. The vibration-damping device according to Claim 1,
wherein the restriction passage includes a rectification path and a vortex chamber which forms a swirling flow of the liquid in accordance with the flow speed of the liquid flowing in from the rectification path, and
wherein the flow-speed restraint portion includes a second restraint portion which is formed by the rectification path and the vortex chamber.

4. The vibration-damping device according to Claim 2,
wherein the restriction passage includes a rectification path and a vortex chamber which forms a swirling flow of the liquid in accordance with the flow speed of the liquid flowing in from the rectification path, and
wherein the flow-speed restraint portion includes a second restraint portion which is formed by the rectification path and the vortex chamber.

5. The vibration-damping device according to Claim 1,
wherein the peak flow speed is restrained to a value smaller than 3.3 m/sec.

6. The vibration-damping device according to Claim 2,
wherein the peak flow speed is restrained to a value smaller than 3.3 m/sec.

7. The vibration-damping device according to Claim 3,
wherein the peak flow speed is restrained to a value smaller than 3.3 m/sec.

8. The vibration-damping device according to Claim 4,
wherein the peak flow speed is restrained to a value smaller than 3.3 m/sec.
